Europäisches Patentamt

European Patent Office

Office européen des brevets

(11) Numéro de publication: **0 301 980**

**A1**

## DEMANDE DE BREVET EUROPEEN

(21) Numéro de dépôt: 88420260.7

(22) Date de dépôt: 21.07.88

(51) Int. Cl.⁴: **B 29 C 49/66**

(30) Priorité: 23.07.87 FR 8710646

(43) Date de publication de la demande:
01.02.89 Bulletin 89/05

(84) Etats contractants désignés: **DE GB IT NL**

(71) Demandeur: **SOCIETE INDUSTRIELLE DE L'ANHYDRIDE CARBONIQUE "SIAC" Société Anonyme**
**57, rue de Villiers**
**F-92527 Neuilly sur Seine (FR)**

(72) Inventeur: **Castan, Joseph**
**5, Chemin des Epigneaux**
**F-95220 Herblay (FR)**

**Beauge, Claude**
**109, rue dela Marne**
**F-95610 Eragny (FR)**

(74) Mandataire: **Ropital-Bonvarlet, Claude**
**Cabinet BEAU DE LOMENIE 99, Grande rue de la Guillotière**
**F-69007 Lyon (FR)**

(54) Procédé et installation de refroidissement d'un corps creux réalisé par extrusion-soufflage à partir d'un polymère thermoplastique.

(57) - Refroidissement de pièces moulées.
- Le procédé est caractérisé en ce qu'il consiste à :
. constituer un aérosol instantané de refroidissement à partir d'air de balayage délivré à une pression comprise entre 5,5 et 20 bar et de dioxyde de carbone liquide pulvérisé à une pression supérieure à celle de son point triple,
. injecter dans le volume interne du corps creux cet aérosol sous forme d'un fluide de balayage par une canne d'injection délivrant un débit de mélange compris entre 150 et 800 fois le volume interne du corps creux par heure.
- Application à la production de pièces moulées à partir d'un polymère thermoplastique.

Fig.4

## Description

### PROCEDE ET INSTALLATION DE REFROIDISSEMENT D'UN CORPS CREUX REALISE PAR EXTRUSION-SOUFFLAGE A PARTIR D'UN POLYMERE THERMOPLASTIQUE

La présente invention concerne la technique de fabrication de corps creux, à partir de polymères thermoplastiques, par moulage d'une paraison soumise à une opération d'extrusion-soufflage à l'intérieur d'un moule délimitant une cavité représentant l'empreinte négative de la forme positive devant être conférée au corps creux.

Les dispositions de l'invention concernent la fabrication de tout corps creux, de révolution ou non, communiquant avec l'extérieur par un ou plusieurs orifices destinés à être munis, ultérieurement, de raccords, de robinets, de bondes, de cannelles, etc.

L'invention vise, plus spécifiquement, dans un mode de réalisation du type ci-dessus, la phase de refroidissement consistant à accélérer l'évacuation des calories encore possédées par le corps creux après son extrusion-soufflage, de manière à conférer, le plus rapidement possible, une cohésion à la matière première extrudée et soufflée, en vue de permettre l'ouverture rapide du moule.

Dans le procédé de réalisation d'un corps creux par extrusion-soufflage, à partir d'un polymère thermoplastique, la technique antérieure propose trois modes de refroidissement principaux.

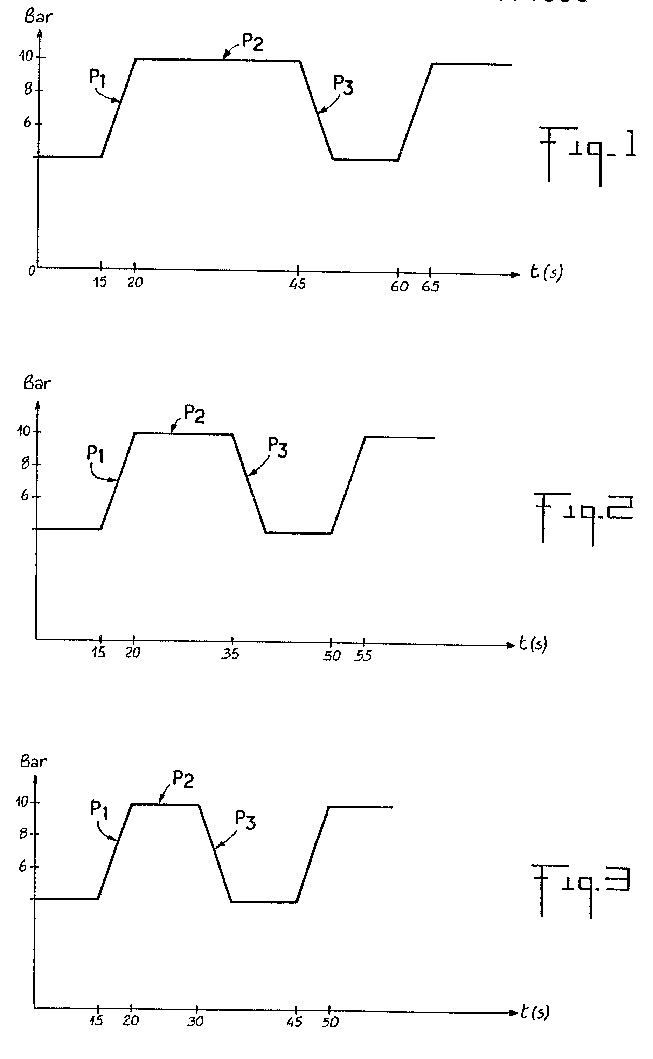

Le premier, illustré par la **fig. 1**, consiste, après la phase P$_1$ d'extrusion-soufflage de la paraison, à maintenir le moule fermé pour assurer le refroidissement de la matière première par échange thermique avec le moule qui est, le plus généralement, parcouru par un fluide de refroidissement.

L'examen de la **fig. 1** permet de constater qu'une telle phase de refroidissement implique un temps de fermeture voisin de 45 secondes, pour la réalisation d'un corps creux à base de polyéthylène, de forme sensiblement parallélépipédique, de dimensions 0,8 m x 0,4 m x 0,2 m et d'épaisseur moyenne égale à 3.10$^{-3}$ m.

Le second consiste à injecter après extrusion-soufflage du dioxyde de carbone liquide à l'intérieur de la pièce creuse fermée. Le dioxyde liquide se vaporise en créant une augmentation de pression favorisant l'application de la matière contre le moule et en prélevant une partie des calories de la matière. Cette méthode produit un refroidissement non homogène et donne lieu, notamment en point bas de la pièce, à la formation de neige carbonique provoquant des défauts de surface ou encore des zones fragilisées.

On connaît, ainsi, d'après le brevet **US-A-3 760 599**, un procédé de refroidissement d'un corps creux dans lequel, une fois l'air de soufflage délivré, du dioxyde de carbone liquide est pulvérisé dans le volume interne du corps creux, à une pression supérieure à son point triple. En raison de l'absence d'air de balayage, on observe un refroidissement non homogène du corps creux, ainsi que la formation de neige carbonique néfaste à la qualité de l'état de surface du corps creux. Ce procédé ne donne pas lieu à la formation d'un aérosol.

Le troisième mode consiste, après extrusion-soufflage de la paraison au cours de l'étape P$_1$, à mettre le volume interne du corps creux réalisé en relation avec un circuit d'entrée et un circuit de sortie délivrant un air de balayage fourni par une installation de refroidissement à une température comprise entre - 150° C et + 20° C et à un débit voisin de 200 Nm$^3$/h.

La **fig. 2** illustre un diagramme d'un cycle opératoire pour la réalisation d'un corps creux de mêmes caractéristiques que celui de l'exemple précédent et mettant en oeuvre une phase de refroidissement par un air de balayage à l'intérieur du corps creux réalisé.

Si l'on examine les diagrammes des **fig. 1** et 2, on constate que le cycle de fabrication est dominé par une durée importante de refroidissement P$_2$ succédant à la phase d'extrusion-soufflage P$_1$ et suivie par une phase P$_3$ d'ouverture du moule. Pour accroître les cadences de fabrication et, dans la mesure du possible, améliorer les qualités de fabrication, la seule possibilité offerte réside dans la réduction de la phase P$_2$ dans la mesure où il n'en découle pas une réduction de la qualité de fabrication.

Cette **fig. 2** permet de constater que la mise en oeuvre d'une phase de refroidissement, par l'intermédiaire d'un air de balayage, permet de ramener le temps de refroidissement à 35 secondes environ.

Cette technique ne s'avère, toutefois, pas satisfaisante, en raison des sujétions qu'elle impose. Il est, en effet, nécessaire de disposer d'une installation de refroidissement, de mise sous pression et, selon les cas, de séchage de l'air de balayage pour conférer, à l'air délivré, des caractéristiques de refroidissement constantes dans le temps. Une telle installation est encombrante, coûteuse d'implantation, mais aussi d'entretien.

Or, le besoin se fait ressentir de pouvoir disposer d'une cadence de production accrue, dans le but, soit de rentabiliser les installations de fabrication, soit de produire directement des objets moulés à moindre prix.

L'objet de l'invention est, justement, de répondre à cette demande, en proposant un nouveau procédé de refroidissement d'un corps creux réalisé par extrusion-soufflage à partir d'un polymère thermoplastique, du type consistant à garnir un moule avec une paraison retenue par l'ouverture du moule, à introduire dans la paraison et par l'ouverture un poinçon de préformage d'un col, à expanser la paraison dans la cavité du moule par soufflage au moyen d'air sous pression injecté par le col, puis à refroidir le corps creux réalisé, au moins par son volume interne avant l'ouverture du moule à l'aide au moins de dioxyde de carbone liquide pulvérisé à une pression supérieure à celle de son point triple, caractérisé en ce qu'il consiste à :

- constituer un aérosol instantané de refroidissement à partir d'air de balayage délivré à une pression comprise entre 5,5 et 20 bar et du dioxyde de carbone liquide pulvérisé à une pression supérieure à celle de son point triple,

- injecter dans le volume interne du corps creux cet aérosol sous forme d'un fluide de balayage par une canne d'injection délivrant un débit de mélange compris entre 150 et 800 fois le volume interne du corps creux par heure.

L'invention a aussi pour objet une installation pour la mise en oeuvre du procédé ci-dessus.

Diverses autres caractéristiques ressortent de la description faite ci-dessous en référence aux dessins annexés qui montrent, à titre d'exemples non limitatifs, des formes de réalisation de l'objet de l'invention.

Les **fig. 1** et **2** sont des diagrammes illustrant des cycles de fonctionnement d'une installation de réalisation par extrusion-soufflage d'un corps creux, à partir d'un polymère thermoplastique, selon la technique antérieure.

La **fig. 3** est un diagramme mettant en évidence les avantages procurés par le procédé de refroidissement selon l'invention, comparativement aux solutions de la technique antérieure selon les **fig. 1** et **2**.

Les **fig. 4** et **5** sont des coupes-élévations schématiques montrant deux mises en oeuvre du procédé de l'invention.

Le procédé de l'invention concerne la phase de refroidissement d'un corps creux réalisé par moulage d'une paraison en polymère thermoplastique, soumise à une phase d'extrusion-soufflage à l'intérieur d'un moule dont la cavité représente l'empreinte négative de la forme devant être conférée au corps creux. Par corps creux, il convient de considérer tout corps, de révolution ou non, d'épaisseur généralement constante et possédant au moins un orifice ou une ouverture de raccordement, d'adaptation ou de montage de tout organe annexe nécessaire pour l'utilisation ultérieure du corps creux.

De façon générale, un tel procédé de moulage consiste à prendre en charge, par la section ouverte du moule, une paraison fournie par un poste de distribution approprié. La paraison est immobilisée dans la section ouverte du moule dans lequel un poinçon est, généralement, introduit pour amorcer le préformage d'un col bordant l'orifice ultérieur du corps creux. Par le poinçon ou par une canne le remplaçant, de l'air est soufflé par le col préformé, de manière à provoquer la mise en forme de la paraison, sa déformation régulière, ainsi que son application contre la cavité du moule.

Le procédé de refroidissement selon l'invention intervient à cette phase du cycle de fabrication.

Le procédé consiste à réaliser, de façon instantanée, un mélange de refroidissement à partir d'un air de balayage, qui traverse donc le corps creux, et de dioxyde de carbone liquide. Le mélange est introduit dans le volume interne du corps creux réalisé, sous la forme d'un aérosol de balayage ayant une première fonction d'application du corps creux dans la cavité du moule et une seconde fonction de prélèvement des calories du polymère thermoplastique.

L'air de balayage est fourni à un corps de mélange à une pression comprise entre 5,5 et 20 bar et à un débit compris entre 150 et 800 fois le volume interne du corps creux par heure.

Le dioxyde de carbone liquide est fourni au corps de mélange, par l'intermédiaire d'un gicleur, à une pression supérieure à celle de son point triple.

L'aérosol ainsi obtenu est injecté à l'intérieur du corps creux réalisé pendant une durée suffisante pour atteindre une consommation massique de dioxyde de carbone liquide, comprise entre 5 et 40 % de la masse du corps creux réalisé et, plus spécialement, entre 15 et 25 %.

La sortie du fluide de balayage peut être contrôlée par un limiteur de débit, de telle sorte que la température du fluide évacué soit, à la sortie du corps creux, comprise entre - 20° C et + 55° C et, plus précisément, entre + 5° C et + 35° C.

Le respect des conditions de refroidissement ci-dessus permet de constater, par comparaison entre les **fig. 1**, **2** et **3**, que, toutes choses étant égales par ailleurs en ce qui concerne le procédé de moulage ainsi que le corps creux à réaliser, le procédé de l'invention permet de réduire le temps de refroidissement à 30 secondes, sans faire intervenir d'installation encombrante, coûteuse et délicate à entretenir.

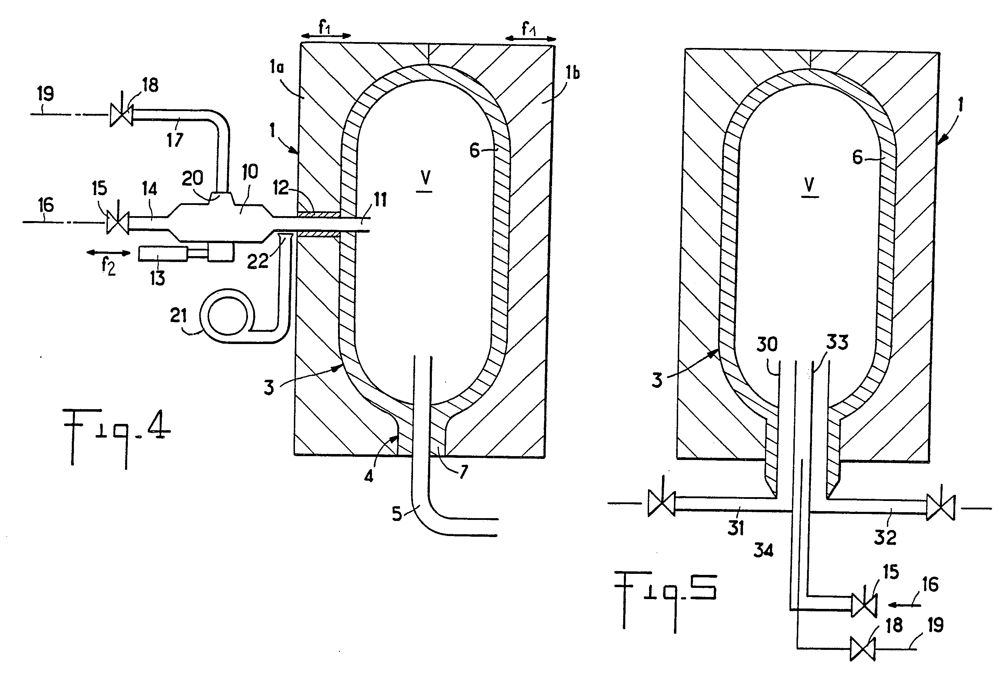

La **fig. 4** montre une installation schématique pour la mise en oeuvre du procédé de l'invention. Cette installation comprend un moule **1** constitué par deux demi-moules **1a** et **1b** qui, de façon traditionnelle, sont adaptés sur des glissières porteuses. Les demi-moules sont associés à des organes moteurs permettant de les déplacer dans l'un ou l'autre sens des flèches $f_1$. Les demi-moules **1a** et **1b** sont usinés de manière à délimiter ensemble une cavité **3** correspondant à l'empreinte négative d'un corps creux à réaliser. Les demi-moules **1a** et **1b** définissent ensemble, à partir de leur plan de joint, une ouverture **4** assumant une première fonction de retenue d'une paraison et une seconde fonction de passage d'une canne **5** de soufflage. De l'air délivré par la canne **5** produit l'extrusion de la paraison dans l'empreinte **3** et la formation d'un corps creux **6** possédant un col **7** formé dans l'ouverture **4** autour de la canne **5**. Le corps creux **6** est illustré sous la forme d'un volume de révolution, mais il doit être considéré qu'une conformation différente pourrait, également, être retenue.

L'installation selon la **fig. 4** comprend, dans un premier mode de réalisation, un corps de mélange **10** prolongé par une canne d'injection **11** qui peut être introduite par l'intermédiaire d'un fourreau de coulissement **12** équipant l'un des demi-moules, tel que le demi-moule **1a**, à l'intérieur du volume interne **V** du corps **6**, après avoir traversé la paroi de ce dernier. Le corps de mélange **10** est, à cette fin, accouplé à un organe moteur **13** capable de le déplacer dans l'un ou l'autre sens de la flèche $f_2$.

Le corps de mélange **10** comporte une première tubulure **14** à laquelle est raccordé, par un robinet **15**, un circuit **16** fournissant un air de balayage exempt de traitement préalable. Le corps **10** comporte, également, une seconde tubulure **17** raccordée par un robinet **18** à un circuit **19** fournissant du dioxyde de carbone sous forme liquide. La tubulure **17** est, de préférence, équipée d'un gicleur **20** chargé de pulvériser le dioxyde de carbone à l'intérieur du corps de mélange **10** où il est pris en charge par l'air de balayage.

Dans l'exemple de réalisation selon la **fig. 4**, le corps de mélange **10** est situé à l'extérieur du moule. Pour éviter le dépôt à l'intérieur de la canne d'injection **11** et, plus particulièrement, dans la partie de cette dernière comprise entre le corps **10** et le moule **1**, de glace hydrique provenant de la présence d'humidité dans l'air de balayage, il est avantageusement prévu de faire comporter à l'installation un moyen de réchauffage **21**, tel qu'un ventilateur pulsant un air chaud par une buse **22**. L'air chaud distribué peut présenter une température de l'ordre de 20° C.

Un moyen technique, permettant d'atteindre le même résultat, consiste à piloter l'ouverture du robinet **18**, de façon séquentielle, pendant la phase de refroidissement. L'ouverture séquentielle vise à produire des injections successives, soit continues, soit, de préférence, discontinues, de dioxyde de carbone liquide, de telle manière que le temps global d'injection du dioxyde soit inférieur de 20 à 60 % à celui de l'injection d'air de balayage. Bien entendu, l'ouverture séquentielle doit aussi respecter la fourniture d'une quantité massique comprise entre 5 et 40 % de la masse du corps creux à réaliser.

La **fig. 5** illustre une variante de réalisation de l'installation consistant à introduire, dans l'ouverture **4** du moule, un fourreau tubulaire **30** raccordé à une canalisation **31** d'amenée d'air de soufflage et à une canalisation **32** d'évacuation des gaz. Le fourreau **30** est équipé d'une canne **33** interne, concentrique, représentant le corps de mélange **10** à l'intérieur duquel est amené un injecteur **34** du dioxyde de carbone liquide. La canne **33** est, comme dans l'exemple précédent, raccordée au circuit **16**, par l'intermédiaire du robinet **15**, alors que l'injecteur **34** est raccordé au circuit **19** par le robinet **18**.

Cette disposition permet de supprimer l'accumulation de glace hydrique, dans la mesure où le fluide de refroidissement, évacué par la canalisation **32**, est maintenu à une température supérieure à 0° C.

L'invention n'est pas limitée aux exemples décrits et représentés, car diverses modifications peuvent y être apportées sans sortir de son cadre. En particulier, il pourrait être envisagé de réaliser le mélange entre l'air de balayage et le dioxyde de carbone en un point situé à l'intérieur du moule proprement dit et en retrait de l'orifice de la canne **11** ou **33**.

## Revendications

1 - Procédé de refroidissement d'un corps creux réalisé par extrusion-soufflage à partir d'un polymère thermoplastique, du type consistant à garnir un moule avec une paraison retenue par l'ouverture du moule, à introduire dans la paraison et par l'ouverture un poinçon de préformage d'un col, à expanser la paraison dans la cavité du moule par soufflage au moyen d'air sous pression injecté par le col, puis à refroidir le corps creux réalisé, au moins par son volume interne avant l'ouverture du moule à l'aide au moins de dioxyde de carbone liquide pulvérisé à une pression supérieure à celle de son point triple,

caractérisé en ce qu'il consiste à :

- constituer un aérosol instantané de refroidissement à partir d'air de balayage délivré à une pression comprise entre 5,5 et 20 bar et du dioxyde de carbone liquide pulvérisé à une pression supérieure à celle de son point triple,

- injecter dans le volume interne du corps creux cet aérosol sous forme d'un fluide de balayage par une canne d'injection délivrant un débit de mélange compris entre 150 et 800 fois le volume interne du corps creux par heure.

2 - Procédé selon la revendication 1, caractérisé en ce que l'on poursuit l'injection de l'aérosol de refroidissement jusqu'à concurrence d'une consommation d'une quantité massique de dioxyde de carbone comprise entre 5 et 40 % de la masse du corps creux réalisé.

3 - Procédé selon la revendication 2, caractérisé en ce que la quantité massique de dioxyde de carbone consommée est comprise entre 15 et 25 % de la masse du corps creux réalisé.

4 - Procédé selon la revendication 1, caractérisé en ce que l'aérosol est produit dans un corps de mélange situé, au moins en partie, hors du moule et prolongé par la canne d'injection.

5 - Procédé selon la revendication 4, caractérisé en ce que la canne d'injection est, au moins en partie, réchauffée entre le corps de mélange et son orifice d'injection.

6 - Procédé selon l'une des revendications 1 à 5, caractérisé en ce que l'aérosol est produit par injection continue d'air de balayage et par injections discontinues de dioxyde de carbone.

7 - Procédé selon la revendication 6, caractérisé en ce que le temps d'injection du dioxyde de carbone est inférieur de 20 à 60 % du temps d'injection d'air de balayage.

8 - Procédé selon la revendication 1, caractérisé en ce que l'aérosol de refroidissement est injecté par la canne d'injection introduite dans le volume interne du corps creux à distance de la canne de soufflage.

9 - Procédé selon la revendication 1, caractérisé en ce que l'aérosol de refroidissement est injecté par la canne d'injection disposée concentriquement à la canne de soufflage.

10 - Installation de réalisation d'un corps creux par extrusion-soufflage, à partir d'un polymère thermoplastique, du type comprenant au moins un moule apte à retenir une paraison de matière et à recevoir, par son ouverture, une canne de soufflage, au moins un poste de refroidissement comportant une canne d'injection (**11**) susceptible de pénétrer dans le volume interne (**V**) du corps creux (**6**) contenu dans le moule (**1**) et s'étendant à partir d'un corps de mélange (**10**) raccordé à un circuit (**16**) d'air et à un circuit (**19**) de dioxyde de carbone liquide, caractérisée en ce que la canne de soufflage (**5, 31**) comporte une canalisation d'évacuation des gaz créant ainsi un circuit (**16**) d'air de balayage.

11 - Installation selon la revendication 10, caractérisée en ce que le circuit d'air de balayage fournit un air dont la pression est comprise entre 5,5 et 20 bar et en ce que le circuit de dioxyde de carbone fournit du dioxyde de carbone liquide à une pression supérieure à celle de son point triple.

0301980

Fig-1

Fig.2

Fig.3

0301980

Fig.5

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | US-A-3 760 599  (R.N. BOSE)<br>* En entier *<br>--- | 1-4,6, 10,11 | B 29 C   49/66 |
| X | US-A-3 783 157  (K. FRANK)<br>* En entier *<br>--- | 1,8,10, 11 | |
| X | PLASTICS NEWS, mars 1980, pages 31-34; G. LANGECKER: "Extrusion blow moulding and internal cooling with CO2"<br>* en entier *<br>--- | 1-3 | |
| A | PLASTVERARBEITER, vol. 27, janvier 1976, pages 17-20; K. WEGERT: "Die Innenkühlung extrusionsgeblasener Kunststoff-Hohlkörper mittels tiefkalter, flüssiger Kohlensäure"<br>* En entier *<br>--- | 1,10 | |
| A | US-A-4 152 383  (L.B. RYDER)<br>* Colonne 1, lignes 11-60; figures *<br>--- | 5 | |
| A | US-A-3 500 497  (E. CULPEPPER)<br>* Figures *<br>--- | 9 | DOMAINES TECHNIQUES RECHERCHES (Int. Cl.4)<br><br>B 29 C |
| A | PLASTICS AND RUBBER PROCESSING AND APPLICATIONS, vol. 5, no. 2, 1985, pages 143-148, The Plastics and Rubber Institute, GB; M.F. EDWARDS et al.: "Liquid carbon dioxide as an internal coolant in blow moulding"<br>* En entier *<br>--- | | |
| A | US-A-3 065 501  (R.C. GASMIRE)<br>----- | | |

Le présent rapport a été établi pour toutes les revendications

| Lieu de la recherche | Date d'achèvement de la recherche | Examinateur |
|---|---|---|
| LA HAYE | 31-10-1988 | SZAMOCKI G.J.A. |